(19) **Europäisches Patentamt European Patent Office Office européen des brevets**

(11) **EP 1 745 110 B1**

(12) **FASCICULE DE BREVET EUROPEEN**

(45) Date de publication et mention
de la délivrance du brevet:
**29.07.2015 Bulletin 2015/31**

(51) Int Cl.:
**B01D 67/00** (2006.01)     **B01D 69/14** (2006.01)
**C09C 3/04** (2006.01)       **H01M 8/10** (2006.01)
**C09C 1/42** (2006.01)

(21) Numéro de dépôt: **05747057.7**

(22) Date de dépôt: **15.04.2005**

(86) Numéro de dépôt international:
**PCT/FR2005/050246**

(87) Numéro de publication internationale:
**WO 2005/101552 (27.10.2005 Gazette 2005/43)**

(54) **PROCEDE DE PREPARATION DE PARTICULES D'ARGILE CONDUCTRICES DE PROTONS ET MATERIAU COMPOSITE COMPRENANT DE TELLES PARTICULES**

VERFAHREN ZUR HERSTELLUNG VON PROTONEN-LEITENDEN TONPARTIKELN UND VERBUNDMATERIALIEN DIE DIESE TEILCHEN ENTHALTEN

METHOD FOR PRODUCTION OF PROTON-CONDUCTING CLAY PARTICLES AND COMPOSITE MATERIAL COMPRISING SAID PARTICLES

(84) Etats contractants désignés:
**AT BE BG CH CY CZ DE DK EE ES FI FR GB GR HU IE IS IT LI LT LU MC NL PL PT RO SE SI SK TR**

(30) Priorité: **15.04.2004 FR 0403939**

(43) Date de publication de la demande:
**24.01.2007 Bulletin 2007/04**

(73) Titulaire: **Commissariat à l'Énergie Atomique et aux Énergies Alternatives
75015 Paris (FR)**

(72) Inventeurs:
• **GALIANO, Hervé**
  **F-37300 JOUE LES TOURS (FR)**
• **CARAVANIER-CAILLON, Magaly**
  **F-41150 RILLY SUR LOIRE (FR)**
• **BEBIN, Philippe**
  **F-37000 TOURS (FR)**
• **HOURQUEBIE, Patrick**
  **F-37320 ESVRES SUR INDRE (FR)**
• **BERGAYA, Faïza**
  **F-45590 SAINT CYR EN VAL (FR)**
• **PONCIN-EPAILLARD, Fabienne**
  **F-72000 LE MANS (FR)**
• **LAFLECHE, Fabrice**
  **F-92380 GARCHES (FR)**

(74) Mandataire: **Ahner, Philippe et al
BREVALEX
95, rue d'Amsterdam
75378 Paris Cedex 8 (FR)**

(56) Documents cités:
WO-A-02/092673          WO-A-03/074595
WO-A-03/081691          US-A- 6 071 335
US-A1- 2002 094 466     US-A1- 2003 032 739
US-A1- 2004 048 129

• JEON H S ET AL: "Characterization of polyisoprene-clay nanocomposites prepared by solution blending" POLYMER, ELSEVIER SCIENCE PUBLISHERS B.V, GB, vol. 44, no. 19, septembre 2003 (2003-09), pages 5749-5758, XP004447605 ISSN: 0032-3861

**Description**

## DOMAINE TECHNIQUE

La présente invention se rapporte à un procédé de préparation de particules conductrices de protons par greffage de composés organiques acides à la surface de particules d'argiles.

La présente invention se rapporte également aux particules obtenues par ce procédé.

Ces particules ont la particularité de présenter une capacité d'échange ionique particulièrement élevée associée à de très bonnes propriétés de rétention d'eau.

De ce fait, ces particules trouvent leur application dans l'élaboration de matériaux conducteurs protoniques, en particulier de matériaux destinés à entrer dans la constitution de membranes conductrices de protons pour piles à combustible, telles que les piles fonctionnant à $H_2$/air ou à $H_2/O_2$ (connues sous l'abréviation PEMFC signifiant « Proton Exchange Membrane Fuel Cell ») ou fonctionnant au méthanol/air (connues sous l'abréviation DMFC signifiant « Direct Methanol Fuel Cell »).

Ainsi, le domaine technique de l'invention peut être défini, de manière générale, comme celui des particules conductrices de protons et des matériaux les contenant.

Plus précisément, l'invention se situe dans le domaine des particules conductrices de protons utilisées dans la constitution de membranes pour piles à combustible fonctionnant à basses températures.

## ÉTAT DE LA TECHNIQUE ANTÉRIEURE

Une pile à combustible est un générateur électrochimique, qui convertit l'énergie chimique d'une réaction d'oxydation d'un combustible en présence d'un comburant en énergie électrique.

Généralement, une pile à combustible comporte une pluralité de cellules électrochimiques montées en série, chaque cellule comprenant deux électrodes de polarité opposée séparées par une membrane échangeuse de protons faisant office d'électrolyte solide.

La membrane assure le passage vers la cathode des protons formés lors de l'oxydation du combustible à l'anode.

Les membranes structurent le coeur de la pile et doivent, par conséquent, présenter de bonnes performances en matière de conduction protonique, ainsi qu'une faible perméabilité aux gaz réactants ($H_2$/air ou $H_2/O_2$ pour les piles PEMFC et méthanol/air pour les piles DMFC). Les propriétés des matériaux constituant les membranes sont essentiellement la stabilité thermique, la résistance à l'hydrolyse et à l'oxydation ainsi qu'une certaine flexibilité mécanique.

Des membranes utilisées couramment et remplissant ces exigences sont des membranes obtenues à partir de polymères constitués d'une chaîne principale linéaire perfluorée et de chaînes latérales portant des groupes acide sulfonique. Parmi les plus connues, on peut citer les membranes commercialisées sous la dénomination NAFION® par la société Dupont de Nemours ou sous la dénomination DOW®, FLEMION® ou Aciplex par les sociétés Dow Chemicals et Asahi Glass. Ces membranes présentent de bonnes performances électrochimiques et une durée de vie intéressante mais néanmoins insuffisante pour les applications PEMFC. De plus, leur coût (plus de 500 euros/m$^2$) reste prohibitif pour la commercialisation. Pour les applications DMFC, elles présentent une perméabilité au méthanol élevée, ce qui limite également leur utilisation avec ce type de combustible. Enfin, ces membranes présentent une importante sensibilité à des températures supérieures à 80°C, ce qui les exclut d'une utilisation dans des piles fonctionnant à des températures élevées, à savoir entre 80°C et 150°C.

Par ailleurs, il est connu que l'efficacité conductrice d'une membrane protonique est fortement liée à la présence d'eau et donc à la capacité de rétention d'eau de la membrane. Or à des températures proches de 100°C, et plus encore au-delà, l'eau est rapidement évacuée de la membrane, provoquant ainsi la chute de la conductivité et augmentant la perméabilité au combustible. A ces températures, cette diminution des performances peut s'accompagner d'une dégradation de la membrane. Pour résoudre les problèmes de dessèchement des membranes dans les piles à combustibles à haute température, à savoir au moins égale à 100°C, le maintien d'une humidité relative maximale de l'ordre de 80% à 100% est requise mais difficilement réalisable par une source externe d'hydratation.

Afin d'augmenter la rétention d'eau dans les membranes de piles à combustible à haute température, certains auteurs se sont orientés vers le développement de membranes plus complexes comprenant des particules minérales en plus d'une matrice en polymère organique conducteur. Ces membranes sont désignées notamment par la terminologie « membranes hybrides inorganiques-organiques ».

Les premières membranes hydrides ont été développées dès la fin des années 90.

Ainsi, Malhotr et al, dans J.Electrochem.Soc.,1997, 144 [1] décrivent des membranes résistantes à des températures allant jusqu'à 110°C, comprenant un polymère du type Nafion® imprégné avec une solution dopante d'hétéropolyacides minéraux.

D'autres membranes hybrides à base de polymères non sulfonés, comme les polybenzimidazoles (Staiti et al., J.Power Sources, 2000, 90, 231 [2]), les polyaryléthersulfones (Baradie et al., Macromol.Symp., 1999, 138, 85 [3]), les copolymères styrène/éthylène/butène/styrène (Hirate et al., J.Sol-Gel Sci. And Techn., 2000, 17, 61 [4]) incorporant chacun des hétéropolyacides conducteurs de type tungstophosphorique ont également été étudiés.

Toutefois, ces membranes hybrides ont pour inconvénient de nécessiter un taux de charge en hétéropolyacides pouvant atteindre 70% pour se rapprocher des performances des membranes Nafion®.

Afin de contourner les inconvénients liés à l'utilisation de particules du type hétéropolyacides décrits ci-dessus, certains auteurs ont remplacé ce type de particules par des particules d'argile.

Les particules d'argile, lorsqu'elles sont incorporées dans des membranes à base de polymère organique conducteur, se révèlent particulièrement intéressantes pour les raisons suivantes :

- elles confèrent aux membranes d'excellentes propriétés de rétention d'eau ;
- elles se révèlent particulièrement stables à de hautes températures ;
- elles présentent de bonnes propriétés de percolation pour des taux de charge faibles.

Toutefois, les auteurs, qui ont développé ces membranes chargées avec des particules d'argile, ont constaté que l'apport de particules d'argile n'améliorait pas de manière significative la conductivité protonique de la membrane.

Il existe donc un véritable besoin pour des particules conductrices aptes à être incorporées dans des membranes de pile à combustible, et permettant d'assurer à la fois une rétention d'eau élevée même à haute température afin d'éviter le dessèchement des membranes et d'assurer également une amélioration de la conductivité protonique des membranes dans lesquelles elles sont incorporées.

Le document US6071335 montre un procédé de préparation de particules d'argile qui sont activées par soumission des particules à un plasma de gaz. Après les particules d'argile réagissent avec une molécule organique, en formant une liaison covalente, pour que la surface de l'argile contienne un groupe réactif.

Le document WO02/092673 décrit une membrane polymère contenant 20-60% du poids des particules. Ces particules sont préférablement des particules d'argile, et préférablement des particules protonées. Le polymère qui forme la matrice peut être conducteur de protons et non conducteur de protons, et aussi être fluoré, aromatique, hétérocyclique, etc. Le matériau composite peut être formé à partir d'un mélange fondu ou au moyen d'un solvant qui est évaporé après mélange. Les membranes sont utilisées pour des piles à combustibles. Les particules d'argile peuvent être fonctionnalisées avec beaucoup de groupes différents, qui peuvent être présents à l'intérieur ou à la surface des particules d'argile, par exemple -PO3H2, -CO2H ou -SO3H.

## EXPOSÉ DE L'INVENTION

Les Inventeurs ont mis au point un procédé de préparation de particules d'argile conductrices de protons aboutissant à l'obtention de particules présentant les avantages énoncés ci-dessus.

L'invention a donc trait, selon un premier objet, à un procédé de préparation de particules d'argile conductrices de protons comprenant successivement les étapes suivantes :

a) une étape d'activation d'une poudre d'argile dans laquelle l'on soumet ladite poudre à un plasma de gaz ;
b) une étape de greffage dans laquelle l'on met en contact la poudre activée obtenue à l'issue de l'étape a) avec une solution comprenant au moins un composé comprenant au moins un groupe choisi parmi -PO$_3$H$_2$, -CO$_2$H, -SO$_3$H et leurs sels et comprenant au moins un groupe apte à se greffer à la surface de ladite poudre.

On précise que, par greffage, on entend, au sens de L'invention, une immobilisation du ou des composés porteurs d'au moins un groupe choisi parmi -PO$_3$H$_2$, -CO$_2$H, -SO$_3$H sur les particules d'argile par le biais d'une liaison chimique covalente, grâce à la présence sur ces composés d'au moins un groupe apte à se greffer chimiquement à la surface de ces particules.

En variante, le procédé de l'invention peut comprendre successivement les étapes suivantes :

a') une étape d'activation d'une poudre d'argile dans laquelle l'on soumet ladite poudre à un plasma de gaz ;
b') une étape de greffage dans laquelle l'on met en contact la poudre activée obtenue à l'issue de l'étape a') avec une solution comprenant un premier composé comprenant au moins un groupe apte à se greffer à la surface de ladite poudre et comprenant au moins un groupe réactif apte à réagir avec un second composé comprenant au moins un groupe choisi parmi -PO$_3$H$_2$, -CO$_2$H, -SO$_3$H et leurs sels ;
c') une étape de mise en contact de la poudre greffée obtenue à l'issue de l'étape b') avec le deuxième composé, de manière à former une liaison covalente entre ledit premier composé et ledit second composé.

Ainsi, les Inventeurs ont modifié l'état de surface d'une poudre d'argile en la soumettant à un plasma de gaz, rendant ainsi possible le greffage de composés à la surface de l'argile, lesquels composés greffés confèrent à cette argile une conductivité protonique grâce à la présence de groupes $-PO_3H_2$, $-CO_2H$, ou $-SO_3H$.

Des argiles particulièrement appropriées pour l'invention sont des argiles appartenant à la famille des smectites. Les argiles smectites peuvent être soit synthétiques, comme la laponite (commercialisée par Laporte Industries, UK), soit naturelles comme la montmorillonite, la beidellite, la saponite ou l'hectorite.

Plus précisément, les argiles smectites sont des phyllosilicates 2:1, di- et/ou trioctaédriques composés de feuillets comprenant une couche octaédrique dont le centre des octaèdres est occupé par de l'aluminium et éventuellement du magnésium, ladite couche octaédrique étant entourée par deux couches de tétraèdres, dont le centre de chacun des tétraèdres est occupé par du silicium. Ces feuillets s'empilent parallèlement pour former des particules dont les différents assemblages donnent lieu à la formation d'agrégats dont la taille maximum est de l'ordre de 2 micromètres. A l'intérieur des feuillets, des substitutions isomorphes par des ions de valence inférieure interviennent donnant ainsi lieu à un déficit de charges à la surface des feuillets, lequel déficit est compensé par des cations venant se loger dans l'espace lamellaire. En présence de solvants polaires, tels que l'eau, les cations susmentionnés ont la capacité d'accueillir dans leur sphère de coordination des molécules de solvants, entraînant ainsi un éloignement des feuillets. Ce phénomène fait que les argiles smectites sont couramment désignées par l'appellation d'argiles gonflantes, grâce à leur capacité élevée de rétention de solvants polaires, tels que l'eau.

Des argiles particulièrement avantageuses dans le cadre de cette invention peuvent être également des argiles smectites dites «à piliers» (également appelées argiles pontées). Ces argiles résultent de l'intercalation entre leurs feuillets de polycations métalliques simples ou mixtes formant des piliers métalliques entre lesdits feuillets.

De telles argiles sont généralement obtenues par mise en contact d'une suspension argileuse smectite avec une solution d'hydroxyde métallique (par exemple, d'hydroxyde d'aluminium ou d'hydroxyde de fer) suivi d'un traitement de calcination, par exemple, à une température allant de 300 à 500°C.

Ces argiles à piliers se révèlent particulièrement avantageuses pour les raisons suivantes :

- elles ne subissent pas de modifications de leur porosité lors d'une exposition à température élevée ;
- elles montrent une surface spécifique, pouvant aller jusqu'à dix fois celles des argiles non pontées ;
- elles se caractérisent par une porosité variable pouvant aller des micropores aux macropores en passant par des mésopores; et
- elles offrent un nombre de sites de greffage plus importants que celles des argiles non pontées.

Comme mentionné précédemment, le procédé selon l'invention comprend, dans un premier temps, une étape consistant à soumettre une poudre d'argile telle que définie ci-dessus à un plasma de gaz, tel qu'un plasma de $CO_2$, He, ou de mélange $He/CO_2$.

On précise que, par plasma de gaz, l'on entend un gaz, dont les atomes ou les molécules ont été ionisé(e)s.

Cette étape est mise en oeuvre, classiquement, dans un réacteur plasma, le gaz étant injecté dans une enceinte sous vide, sous une pression pouvant aller de quelques millibars à plusieurs bars, par exemple, une pression égale à 0,1 mbar. Lorsque le vide souhaité est atteint, une décharge électrique est établie entre deux électrodes placées dans l'enceinte, la fréquence pouvant varier de quelques Hertz à plusieurs milliers de Hertz, par exemple, pouvant être égale à 13,56 MHz. La durée de cette étape peut varier de quelques secondes à plusieurs dizaines de minutes selon le degré d'activation recherchée, étant entendu que plus la durée du traitement et la puissance des décharges électriques seront élevées, plus la poudre d'argile pourra accueillir une proportion importante de molécules greffées.

On précise que, pendant l'étape d'activation, la poudre d'argile est soumise avantageusement à une agitation ultrasonique, de manière à éviter la formation d'agglomérats.

Après l'étape d'activation, la poudre d'argile est mise en contact, selon le premier objet avec une solution comprenant au moins un composé comprenant au moins un groupe choisi parmi $-PO_3H_2$, $-CO_2H$, $-SO_3H$ et leurs sels et comprenant au moins un groupe apte à se greffer à la surface de ladite poudre, un tel groupe apte à se greffer pouvant avantageusement être un groupe éthylénique (c'est-à-dire un groupe comprenant une liaison double carbone-carbone).

Par sels, on entend, dans ce qui précède et ce qui suit, des composés tels que définis précédemment dont les protons acides des groupes $-PO_3H_2$, $-SO_3H$ et $-CO_2H$ sont remplacés par des cations, tels que des cations de métaux alcalins (par exemple, Na, K).

Des composés adéquats peuvent être des monomères vinyliques, c'est-à-dire des monomères comprenant au moins un groupe éthylénique (c'est-à-dire comprenant une liaison double carbone-carbone). Ces monomères se révèlent être particulièrement intéressants du fait de la présence de ce groupe éthylénique, qui est un excellent groupe apte à se greffer à la surface des particules d'argile activée.

Parmi les monomères vinyliques susceptibles d'être utilisés, on peut citer l'acide vinylsulfonique, l'acide vinylphosphonique, l'acide vinylacétique et leurs sels.

Parmi les monomères vinyliques susceptibles d'être utilisés, on peut citer encore des monomères styréniques tel que l'acide 4-vinylbenzoïque ou l'acide 3-vinylbenzoïque, l'acide 4-vinylbenzènesulfonique ou l'acide 3-vinylbenzènesulfonique, L'acide 4-vinylbenzènephosphonique ou l'acide 3-vinylbenzènephosphonique.

Les monomères vinyliques susceptibles d'être utilisés peuvent être également des monomères fluorés, c'est-à-dire des monomères dont un ou plusieurs atomes d'hydrogène sont substitués par des atomes de fluor.

Lors de l'étape de greffage, il se peut que les composés monomères n'ayant pas réagi se polymérisent entre eux ou restent en solution. Afin d'éliminer toutes traces de polymère(s) éventuel (s) ou de monomères n'ayant pas réagi avec les particules d'argile, le procédé selon l'invention peut comprendre, en outre, une étape de lavage correspondant à un lavage de l'argile greffée par un solvant du ou des monomères utilisés pour le greffage de l'éventuel polymère ou des éventuels polymères correspondants.

En plus des avantages déjà énoncés, le procédé de fabrication de particules conductrices de protons présente encore ceux d'être simple et rapide de mise en oeuvre, de ne nécessiter que des équipements couramment utilisés en laboratoire et au niveau industriel, et de conduire à l'obtention de particules sous forme d'une poudre d'argile qui, outre des propriétés très élevées de rétention d'eau, présentent une excellente conductivité protonique.

L'invention a donc aussi pour objet des particules susceptibles d'être obtenues par le procédé tel que décrit précédemment.

De telles particules se présentent sous forme d'une poudre d'argile greffée par des restes de composés comportant au moins un groupe choisi parmi -PO$_3$H$_2$ -CO$_2$H, -SO$_3$H et leurs sels.

Ces restes de composés peuvent être avantageusement des restes de monomères vinyliques, de préférence styréniques, tel que ceux définis ci-dessus.

En plus d'excellentes qualités de rétention d'eau, lesdites particules présentent d'excellentes propriétés de conduction protonique, et donc de mobilité ionique.

Ces particules peuvent donc être utilisées pour la séparation ou la récupération de métaux en solution.

Les particules de l'invention peuvent trouver également leur application dans la conception de matériaux composites conducteurs, tels que des membranes conductrices, notamment des membranes conductrices de protons destinées à être utilisés dans des piles à combustible.

L'invention a donc également pour objet un matériau composite conducteur de protons comprenant une matrice de polymère au sein de laquelle sont dispersées des particules telles que définies précédemment.

Selon une première alternative, la matrice de polymère peut être une matrice de polymère non conducteurs de protons.

De tels polymères peuvent être des polymères fluorés tels que le polytétrafluoroéthylène (PTFE), le polyfluorure de vinylidène (PVDF), le copolymère tétrafluoroéthylène/éthylène (ETFE) et leurs dérivés. Les polymères fluorés ont notamment pour avantage de présenter une bonne tenue mécanique ainsi qu'une bonne résistance chimique.

De tels polymères peuvent être également des polymères aromatiques ou hétérocycliques. On précise que, par polymères aromatiques ou hétérocycliques, on entend un polymère dont la chaîne principale comprend un enchaînement de motifs aromatiques (par exemple, phénylène) ou hétérocycliques (par exemple, benzimidazole). Parmi ces polymères, on peut citer les polysulfones, les polyaryl éthercétones, les polyimides, les polybenzimidazoles, les polyoxydes de phénylène, les polycarbonates. De tels polymères ont pour particularité de conférer au matériau composite, dans lequel ils sont intégrés, une rigidité et une résistance chimique et thermique élevées, sans nécessiter l'incorporation au matériau composite d'apport de renfort ou de charge.

Selon une deuxième alternative, la matrice de polymère peut être une matrice de polymère conducteurs de protons.

De tels polymères peuvent être des polymères perfluorés sulfonés. On précise que, par polymères perfluorés sulfonés, on entend des polymères comprenant une chaîne principale linéaire perfluorée et des chaînes latérales porteurs de groupements acide sulfonique. De tels polymères sont notamment disponibles dans le commerce sous la marque déposée NAFION® par la société Dupont de Nemours, ou ACIPLEX-S® de la société Asahi Chemical.

Des polymères conducteurs de protons peuvent être également des polymères aromatiques ou hétérocycliques porteurs de fonctions acides choisies parmi -SO$_3$H, -PO$_3$H$_2$ et -CO$_2$H. De tels polymères peuvent être des polysulfones, des polyaryléthercétone s, des polyimides, des polybenzimidazoles, des polyoxydes de phénylène, des polycarbonates.

Le matériau composite selon l'invention se présente avantageusement sous forme d'un film, présentant par exemple une épaisseur de 50 à 150 $\mu$m.

L'invention concerne également des procédés de préparation d'un matériau composite conducteur de protons tel que défini ci-dessus.

Pour préparer un matériau conducteur de protons de l'invention, deux alternatives sont envisageables, selon l'invention.

Selon une première alternative, le procécé comprend successivement les étapes suivantes :

- mélanger, en l'absence de solvant, un ou plusieurs polymères constitutifs de la matrice avec des particules telles que définies ci-dessus ;
- former à partir du mélange obtenu le matériau composite par voie fondue.

En variante, le procédé peut comprendre successivement les étapes suivantes :

- fondre, en l'absence de solvant, un ou plusieurs polymères constitutifs de la matrice ;
- incorporer, dans le polymère ou le mélange de polymères fondus des particules telles que définies ci-dessus.

Selon la première alternative, le traitement thermique comprend généralement une étape de chauffage du mélange obtenu après la première ét ape à une température pouvant aller de 100°C à 300°C, de manière à obtenir un mélange fondu et une étape simultanée ou consécutive de mise en forme du mélange, afin d'obtenir le matériau composite voulu, cette mise en forme pouvant consister en un calandrage.

Parmi les traitements thermiques par voie fondue appropriés, on peut citer l'extrusion.

Selon une seconde alternative, le procédé comprend successivement les étapes suivantes :

- une étape de mélange d'une solution comprenant des particules telles que définies précédemment et un ou plusieurs solvants avec un ou plusieurs polymères constitutifs de la matrice ;
- une étape de formation, à partir du mélange obtenu, d'un matériau composite par évaporation du ou des solvant(s).

Selon cette seconde alternative, la solution peut être coulée sur un support, par exemple, en verre, en alumine ou encore en polyéthylène, puis le matériau sous forme de film est formé par évaporation du ou des solvants. A l'issue de ce procédé, on obtient un matériau sous forme de film déposé sur le support. Le film obtenu peut être facilement désolidarisé du support, pour donner un film conducteur protonique auto-supporté.

On précise que les solvants susceptibles d'être utilisés dans le cadre de ce procédé peuvent être choisis parmi les solvants polaires aprotiques tels que le diméthylformamide, le diméthylacétamide, le tétrahydrofurane, le diméthylsiloxane, ou encore des solvants chlorés comme le chloroforme, mais aussi des solvants tels que les alcools, les éthers, l'acétone.

Du fait de leurs propriétés mécaniques, ces matériaux peuvent être mis en oeuvre efficacement et conduire à des films minces suffisamment résistants pour être utilisés comme membranes pour pile à combustible.

Ainsi l'invention a pour objet une membrane pour pile à combustible comprenant un matériau composite conducteur protonique tel que défini ci-dessus.

Ces membranes se présentent avantageusement sous la forme de films minces, ayant, par exemple, une épaisseur de 20 à 200 micromètres.

Ces membranes présentent avantageusement une imperméabilité suffisante aux gaz réactants (tels que $H_2$ et $O_2$) et sont stables, de préférence, jusqu'à une température d'au moins 150°C.

De préférence, le matériau composite constitutif de la membrane comprend de 1 à 20% en poids de particules d'argile telles que définies précédemment, lorsque la matrice de polymère comprend un ou plusieurs polymères conducteurs de protons.

De préférence, le matériau composite constitutif de la membrane comprend de 5 à 50% en poids de particules d'argile telles que définies précédemment, lorsque la matrice polymère comprend un ou plusieurs polymères non conducteurs de protons.

On précise que les % ci-dessus sont exprimés par rapport au poids total du matériau composite.

Les membranes de l'invention sont préparées par des procédés identiques à ceux définis ci-dessus pour le matériau composite conducteur protonique.

Les membranes tels que définies ci-dessus peuvent être avantageusement incorporées dans des dispositifs de pile à combustible.

Ainsi, l'invention a trait également à un dispositif comprenant au moins un assemblage électrode-membrane-électrode, dans lequel la membrane est telle que définie ci-dessus.

Le dispositif de pile à combustible comprend généralement plusieurs assemblages électrode-membrane-électrode.

Pour préparer un tel assemblage, la membrane peut être placée entre deux électrodes, par exemple en tissu ou en papier de carbone imprégné d'un catalyseur. L'ensemble formé de la membrane disposée entre les deux électrodes est ensuite pressé à une température adéquate afin d'obtenir une bonne adhésion électrode-membrane.

L'assemblage électrode-membrane-électrode est ensuite placé entre deux plaques assurant la conduction électrique et l'alimentation en réactifs aux électrodes. Ces plaques sont communément désignées par le terme de plaques bipolaires.

L'invention va maintenant être décrite à la lumière des exemples donnés ci-dessous donnés à titre illustratif et non limitatif.

## BRÈVE DESCRIPTION DES DESSINS

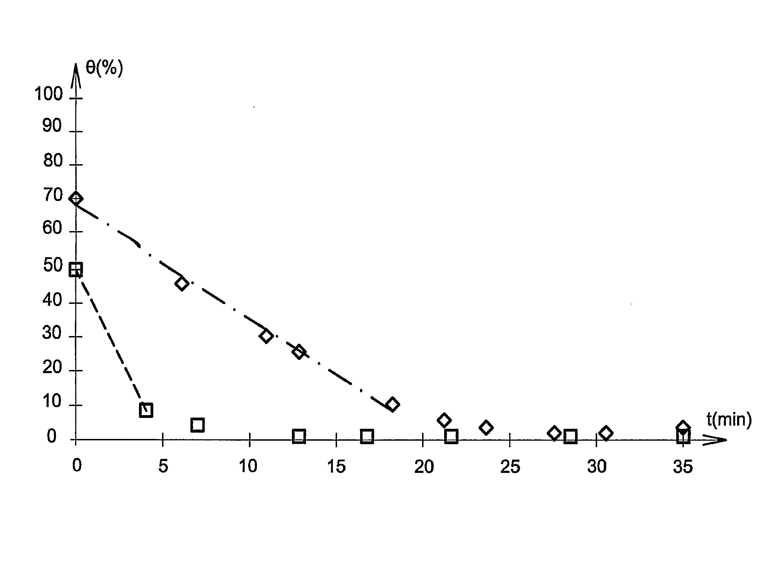

La figure unique est un graphique représentant le taux d'hydratation $\theta$ (en %) en fonction du temps t (en min) à 75°C d'une membrane en NAFION® sans particules (courbe dont les points sont représentés par des carrés) et d'une membrane de NAFION® reconstitué et comprenant des particules conformes à l'invention (essai n°14) (courbe dont les points sont représentés par des losanges).

## EXPOSÉ DÉTAILLÉ DE MODES DE RÉALISATION PARTICULIERS

EXEMPLE 1.

Cet exemple illustre la préparation de particules d'argile laponite greffée à 7%.

On entend par «greffée à 7%» une argile ayant subi le traitement décrit dans l'invention de manière à comprendre 7% en masse de soufre issu du greffage de composés comprenant des fonctions -SO$_3$H.

Le protocole de préparation est le suivant.

Une laponite type RD (2 g) est placée dans une coupelle, elle-même introduite dans l'enceinte d'un réacteur plasma, l'ensemble étant soumis à une agitation ultrasonique. Un vide primaire est établi suivi de l'introduction d'hélium dans l'enceinte à une pression de 0,1 mbar. Une décharge électrique est établie entre deux électrodes placées dans l'enceinte à une fréquence de 13,56 MHz. A l'issue de ce traitement, l'on obtient une argile modifiée par traitement plasma.

4 g d'acide styrène para-sulfonique (ou acide 4-vinylbenzènesulfonique) sont dissous dans du diméthylformamide (DMF). L'argile modifiée préalablement est alors mise en contact avec la solution d'acide styrène para-sulfonique dans le DMF et portée au reflux pendant une nuit.

L'argile greffée est ensuite lavée avec le DMF afin d'éliminer toutes traces éventuelles d'homopolymère sulfoné, qui se serait formé lors du greffage.

L'argile ainsi obtenue présente une proportion massique de soufre de 7% (mesurée par analyse élémentaire), ce qui correspond à une capacité d'échange ionique (CEI) de 1,8 méq/g.

EXEMPLE 2.

Cet exemple illustre la préparation d'une argile laponite à piliers greffée à 9%.

Les argiles laponites de départ sont des laponites RD pontées à l'Al/Fe (50%/50%) et à l'Al, c'est-à-dire des argiles dans lesquelles des polycations d'aluminium, ou un mélange de polycations d'aluminium et de fer, sont incorporés entre les feuillets des argiles, présentant une surface spécifique de 350 m$^2$/g et un volume mésoporeux d'environ 0,3 cm$^3$/g.

Le mode opératoire mis en oeuvre dans cet exemple est le même que celui de l'exemple 1.

Il conduit à des argiles laponites pontées présentant un taux de 9% en soufre (obtenu par analyse élémentaire) correspondant à une capacité d'échange ionique (CEI) de 3 ($\pm$ 0,2) méq/g.

EXEMPLE 3.

Cet exemple illustre la préparation de membranes de compositions différentes par coulée évaporation.

Le protocole général de préparation est le suivant.

Dans un premier temps, l'argile modifiée est mise en dispersion dans un solvant organique approprié (ici le DMF). La masse de solvant représente environ 80% en poids de la masse de polymère à utiliser pour constituer la matrice. Après agitation vigoureuse de la solution comprenant l'argile et le DMF, au moyen d'un agitateur magnétique, le polymère destiné à constituer la matrice est ajouté progressivement. La solution obtenue est maintenue sous agitation pendant au moins 48 heures jusqu'à une complète dissolution du polymère. Ensuite, la solution résultante est soumise à un bain ultrasonique pendant plusieurs minutes. Si des bulles d'air apparaissent en solution, on procède à un dégazage de celle-ci.

Dans un deuxième temps, le mélange visqueux est déposé sur une plaque de verre au moyen d'un « Hand-Coater » placé sous une hotte à flux laminaire. L'applicateur choisi pour la coulée dépend de la viscosité de la solution qui est fonction de sa composition, et en particulier du taux massique d'argile qu'elle contient. Classiquement, l'entrefer de l'applicateur utilisé varie de 750 $\mu$m à 1250 $\mu$m. Une évaporation lente du solvant est assurée en plaçant la plaque de verre sur une plaque thermostatée dont la température est fixée à 30°C. Le temps de séchage dure environ de 6 à 7 heures.

Il est à noter que l'argile greffée est stockée, avant utilisation au sein d'une étuve thermostatée. En ce qui concerne le polymère, celui-ci peut se présenter sous la forme d'une poudre fine comme c'est le cas pour le polymère fluoré poly (fluorure de vinylidène) (PVDF) utilisé dans les essais 1 à 8 ou bien sous forme d'une solution visqueuse comme pour le NAFION® qui est dissous dans un mélange d'alcools utilisé dans les essais 9 à 15.

Différentes membranes ont été préparées suivant la technique décrite ci-dessus. La nature de l'argile et du polymère, ainsi que les proportions de ces éléments pour chacune des membranes figurent dans le tableau 1 regroupant les membranes dont la matrice est en PVDF et dans le tableau 2 regroupant les membranes dont la matrice est en NAFION®.

TABLEAU 1

| Essai | % PVDF | ARGILE | |
| | | % | Description |
|---|---|---|---|
| 1 | 100 | 0 | / |
| 2 | 75 | 25 | non pontée et non greffée |
| 3 | 75 | 25 | pontée Al et greffée à 9% (Exemple 2) |
| 4 | 75 | 25 | pontée Al/Fe et greffée à 9% (Exemple 2) |
| 5 | 75 | 25 | non pontée et greffée à 7% (Exemple 1) |
| 6 | 70 | 30 | |
| 7 | 60 | 40 | |
| 8 | 50 | 50 | |

TABLEAU 2

| Essai | % NAFION® | ARGILE NON PONTEE | |
| | | % | description |
|---|---|---|---|
| 9 | 100 | 0 | / |
| 10 | 90 | 10 | non greffée |
| 11 | 98 | 2 | greffée à 7% (Exemple 1) |
| 12 | 97 | 3 | |
| 13 | 95 | 5 | |
| 14 | 90 | 10 | |
| 15 | 85 | 15 | |

EXEMPLE 4.

Cet exemple illustre la préparation de membranes de compositions différentes par extrusion de film.

Plus précisément, dans cet exemple, des mélanges comprenant le polymère PVDF et l'argile à piliers greffée (exemple 2) ou non greffée ont été préparés par extrusion. Les mélanges sont composés de PVDF commercialisé par Solvay et de différents taux massiques d'argiles à piliers Al greffées à 9% (la teneur de 9% indiquant que les argiles comprennent après modification 9% de soufre) (exemple 2) et non greffées. Avant leur introduction dans l'extrudeuse, les différents constituants du mélange sont étuvés à 80°C pendant 24 heures.

Le PVDF est introduit dans l'extrudeuse par un doseur pondéral au débit constant de 350 g/h. L'argile à piliers est introduite au moyen d'un doseur pondéral dont le débit est modulé de façon à obtenir différentes compositions contenant de 20 à 40% en poids d'argile.

L'extrudeuse utilisée dans le cadre de cet exemple est une extrudeuse bi-vis co-rotative. Elle est équipée de vis interpénétrés et d'un fourreau et permet d'obtenir des distributions de temps de séjour étroites. L'équilibre des pressions autorise de s couples, des vitesses de cisaillement et des débit s importants. La zone d'alimentation comporte deux vis de convoyage qui évitent un encombrement de celle-ci et la formation d'un bouchon au niveau de la trémie d'alimentation. Le PVDF est introduit au début de la zone d'alimentation, tandis que l'argile est introduite en aval du point d'alimentation du polymère.

En sortie d'extrudeuse, on obtient de s mélanges homogènes.

Après extrusion, les mélanges obtenus sont mis en forme à l'aide d'une filière plate d'entrefer 200 $\mu$m et d'un système d'étirage, sous forme de films minces d'épaisseur 100 $\mu$m.

Les compositions des différentes membrane s préparées selon le protocole exposé ci-dessus sont regroupées dans le tableau 3 ci-dessous.

TABLEAU 3

| Essai | % PVDF | ARGILE | |
|---|---|---|---|
| | | % | Description |
| 16 | 100 | / | / |
| 17 | 80 | 20 | pontée Al et non greffée |
| 18 | 60 | 40 | |
| 19 | 80 | 20 | pontée Al et greffée à 9% (Exemple 2) |
| 20 | 60 | 40 | |

EXEMPLE 5.

Cet exemple vise à illustrer les propriétés électrochimiques des membranes obtenues par coulée-évaporation (exemple 3) et extrusion (exemple 4) de l'invention.

Avant de mesurer ces propriétés, les membranes à base de PVDF et de NAFION® ont été soumises à une étape de régénération des fonctions sulfoniques ($SO_3H$). Cette étape consiste à plonger successivement les membranes dans une solution de $H_2O_2$ (35%) pendant 1 heure puis dans une solution de $H_2SO_4$ (0,5 M) pendant 1 heure suivi d'un rinçage dans de l'eau à ébullition pendant 1 heure. Les membranes sont ensuite stockées dans une bain d'eau désionisée pendant au moins 20 minutes. L'épaisseur des films obtenus varie de 80 à 18 $\mu$m .

Les membranes sont caractérisées dans cet exemple en termes de conductivité protonique, de taux d'hydratation et de capacité d'échange ionique théorique (CEI calculée).

La conductivité protonique $\sigma$, exprimée en S.cm$^{-1}$, est mesurée à l'aide d'un impédancemètre relié à une cellule à électrodes de platine plongeant dans un bain d'eau désionisée à température ambiante. Le contact électrode-membrane est assuré par un ressort situé à l'extrémité d'une des électrodes. L'analyseur de fréquence utilisé est un Solartron 1255 associé à une interface électrochimique Novocontrol (NBS).

Le taux d'hydratation est déterminé en utilisant un dessiccateur infrarouge. La membrane imbibée d'eau est pesée et la masse humide $m_h$ correspondante est notée. Par l'intermédiaire du dessiccateur infrarouge, la membrane subit un cycle de séchage (15 minutes à 140°C) et sa masse sèche $m_s$ est alors déterminée. Le taux d'hydratation G, exprimé en pourcentage massique, de la membrane peut alors être calculé suivant l'équation :

$$G=((m_h-m_s)/m_s)*100$$

Les capacités d'échange ionique théorique (CEI) sont calculées sur le principe que la CEI de la membrane composite respecte une loi d'additivité dans laquelle chacune de ses composantes porteurs de fonctions sulfoniques apporte sa contribution à la CEI globale de la membrane au prorata de son pourcentage massique comme cela est exprimé dans l'équation ci-dessous.

$$CEI_{théorique}=(\%_{polymère}*CEI_{polymère})+(\%_{argile}*CEI_{argile})$$

L'analyse élémentaire des polymères et des argiles utilisées dans l'invention permet de déterminer le pourcentage massique de l'élément soufre et donc la CEI liée aux fonctions sulfoniques correspondantes.

Les résultats figurent dans le tableau 4 ci-dessous.

TABLEAU 4

| Essai | CEI théorique (méq.g$^{-1}$) | Taux d'hydratation (%) | $\sigma$ (en S.cm$^{-1}$) |
|---|---|---|---|
| Nafion® | 0,91 | 31 | 2,18.10$^{-2}$ |

(suite)

| Essai | CEI théorique (méq.g$^{-1}$) | Taux d'hydratation (%) | σ (en S.cm$^{-1}$) |
|---|---|---|---|
| 9 | 0,91 | 40 | $1,82.10^{-2}$ |
| 10 | 0,77 | 87 | $1,41.10^{-2}$ |
| 11 | 0,93 | 44 | $2,19.10^{-2}$ |
| 12 | 0,94 | 52 | $2,04.10^{-2}$ |
| 13 | 0,96 | 51 | $1,78.10^{-2}$ |
| 14 | 1,02 | 80 | $4,44.10^{-2}$ |
| 15 | 1,07 | 71 | $3,57.10^{-2}$ |
| 1 | 0 | 7 | $10^{-7}$ |
| 2 | 0 | 20 | $8,13.10^{-6}$ |
| 3 | 0,70 | 23 | $1,02.10^{-5}$ |
| 4 | 0,70 | 24 | $9,59.10^{-6}$ |
| 5 | 0,50 | 35 | $1,49.10^{-5}$ |
| 6 | 0,60 | 38 | $2,57.10^{-5}$ |
| 7 | 0,80 | 65 | $2,00.10^{-4}$ |
| 8 | 1,00 | 120 | $7,05.10^{-5}$ |
| 16 | 0 | 7 | $<10^{-7}$ |
| 17 | 0 | 47 | $<10^{-7}$ |
| 18 | 0 | 90 | $<10^{-7}$ |
| 19 | 0,60 | 42 | $5.10^{-5}$ |
| 20 | 1,20 | 82 | $8.10^{-4}$ |

L'ajout de particules conformes à l'invention, à du Nafion® (essais 11 à 15) permet de maintenir une CEI théorique du matériau qui soit au moins équivalente à celle du Nafion® initial (essai 9). Pour un même taux de charge ajouté à une matrice en Nafion®, l'incorporation d'argile greffée dans une matrice en Nafion® permet d'atteindre des valeurs de conduction supérieure à celle de la matrice seule mais également à celle d'une matrice qui incorporerait une quantité d'argile non greffée (essai 10). Dans le cas de matrices ne présentant pas de conduction protonique propre, comme par exemple les matrices à base de PVDF (essais 1 à 8), l'ajout d'argile greffée permet d'accéder à des propriétés de conduction protonique, le copolymère n'en possédant pas à l'état inerte. On note d'ailleurs qu'un maximum de conductivité est atteint pour une proportion en particules de 40% en masse (essai n°7) .

De plus, quelle que soit la matrice de polymère utilisée, l'ajout de particules permet en plus une hydratation optimale de la membrane. En effet, l'addition d'argile greffée améliore systématiquement le taux d'hydratation de la matrice utilisée, qu'elle soit conductrice protonique (Nafion® avec essais 11 à 15) ou non (PVDF avec essais 3 à 8 et 17 à 20).

Les résultats obtenus avec les membranes extrudées (essais n°16 à 20) sont en parfait accord avec les conclusions émises dans le cas des membranes réalisées par coulée-évaporation. En comparant les essais n°4 et 19, on peut noter que pour un taux de particules proches (25% et 20% respectivement), la mise en oeuvre par extrusion permet d'accéder à des conductivités légèrement supérieures à celles mesurées dans le cas des membranes réalisées par coulée-évaporation. Ce résultat peut être attribué à une meilleure accessibilité des particules dans la membrane extrudée, due à une meilleure dispersion des particules d'argile par la mise en oeuvre du procédé d'extrusion.

On peut ainsi en conclure que :

- l'ajout de particules permet une meilleure hydratation des membranes comparativement aux membranes non chargées. Ce résultat est particulièrement important dans le ca s des membranes perfluorées sulfonées compte tenu des défauts d'hydratation que présente le NAFION® à des températures supérieures à 80°C ;
- la présence de particules dans les membranes, telles que des membranes en NAFION®, permet de maintenir les propriétés de conduction du NAFION® compte tenu d'une CEI dans la membrane hybride équivalente à celle du NAFION® non chargé ;

- les particules confèrent une conductivité protonique à des membranes à base de polymères non conducteurs, telles que des membranes à base de PVDF.

L'exemple exposé ci-dessous permet de démontrer que les nanoparticules de l'invention permettent d'améliorer la conductivité protonique ainsi que l'hydratation des membranes dans lesquelles elles sont incorporées.

EXEMPLE 6.

Cet exemple vise à mettre en évidence les propriétés de rétention d'eau des membranes de l'invention. La membrane testée dans cet exemple est celle de l'essai 14 (cf. exemple 3, tableau 2).

Les mesures de cinétique de déshydratation des membranes sont réalisées au moyen d'une étuve dont la température est fixée à 75°C. Les membranes sont préalablement activées suivant le protocole décrit dans l'exemple 5. Les membranes sont ensuite stockées pendant 24 heures dans un bain d'eau désionisée à température ambiante afin d'atteindre un état d'hydratation maximal et stable. Au temps $t_0$, les membranes imbibées sont placées dans l'étuve à 75°C puis à intervalles réguliers, la masse des échantillons est relevée. L'évolution du taux d'hydratation de la membrane en fonction du temps permet d'évaluer la cinétique de désorption d'eau à température élevée dans les membranes. A titre d'exemple, les cinétiques de désorption à 75°C, obtenues dans le cas des membranes à base de NAFION® sont reportées sur la figure unique annexée.

On observe sur cette figure que la capacité de rétention d'eau à 75°C est beaucoup plus importante pour les membranes comprenant des particules conformes à l'invention que dans le cas du NAFION® sans charge.

Ainsi, les membranes comprenant des particules conformes à l'invention montrent une bonne capacité de rétention d'eau â haute température grâce à l'ajout de particules conformes à l'invention. En effet, à 75°C, il faut environ 4 fois plus de temps à la membrane comprenant des particules pour perdre son eau d'hydratation que pour le NAFION® seul.

Il peut ainsi être noté que les membranes NAFION® incorporant des particules conformes à l'invention présentent un avantage important par rapport aux membranes NAFION® sans particules, en ce sens qu'elles offrent un taux d'hydratation et une capacité de rétention d'eau plus importants. On peut en conclure que les membranes à base d'une matrice perfluorée avec des particules de l'invention ont une capacité de gestion de l'eau nettement moins problématique que dans le cas des membranes NAFION® sans particules.

**Références citées.**

[1]J.Electrochem.Soc., 1997, 144 ;
[2]J.Power Sources, 2 000, 90, 231 ;
[3]Macromol.Symp., 19 99, 138, 85 ;
[4]J.Sol-Gel Sci. And Techn., 2000, 17, 61.

**Revendications**

1. Procédé de préparation de particules d'argile conductrices de protons comprenant successivement les étapes suivantes :

   a) une étape d'activation d'une poudre d'argile dans laquelle l'on soumet ladite poudre à un plasma de gaz ;
   b) une étape de greffage dans laquelle l'on met en contact la poudre activée obtenue à l'issue de l'étape a) avec une solution comprenant au moins un composé comprenant au moins un groupe choisi parmi -$PO_3H_2$, -$CO_2H$, -$SO_3H$ et leurs sels et comprenant au moins un groupe apte à se greffer à la surface de ladite poudre, moyennant quoi ledit composé est immobilisé à la surface de ladite poudre par le biais d'une liaison chimique covalente.

2. Procédé de préparation de particules selon la revendication 1, dans lequel l'argile est une argile smectite.

3. Procédé de préparation de particules selon la revendication 2, dans lequel l'argile smectite est synthétique ou naturelle.

**4.** Procédé de préparation de particules selon la revendication 3, dans lequel l'argile smectite synthétique est une laponite.

**5.** Procédé de préparation de particules selon la revendication 3, dans lequel l'argile smectite naturelle est choisi dans le groupe constitué par la montmorillonite, la beidellite, la saponite, l'hectorite.

**6.** Procédé de préparation de particules selon la revendication 1, dans lequel l'argile est une argile smectite à piliers.

**7.** Procédé de préparation de particules selon l'une quelconque des revendications 1 à 6, dans lequel le plasma de gaz est un plasma de $CO_2$, d'hélium ou d'un mélange $CO_2$/He.

**8.** Procédé de préparation de particules selon la revendication 1, dans lequel le composé est un monomère vinylique.

**9.** Procédé de préparation de particules selon la revendication 8, dans lequel le monomère vinylique est choisi parmi l'acide vinylsulfonique, l'acide vinylphosphonique, l'acide vinylacétique.

**10.** Procédé de préparation de particules selon la revendication 8, dans lequel le monomère vinylique est un monomère styrénique.

**11.** Procédé de préparation de particules selon la revendication 10, dans lequel le monomère styrénique est choisi parmi l'acide 4-vinylbenzoïque,
l'acide 3-vinylbenzoïque,
l'acide 4-vinylbenzènesulfonique,
l'acide 3-vinylbenzènesulfonique,
l'acide 4-vinylbenzènephosphonique,
l'acide 3-vinylbenzènephosphonique.

**12.** Procédé de préparation de particules selon la revendication 8, dans lequel le monomère vinylique est un monomère fluoré.

**13.** Particules d'argile conductrices de protons susceptibles d'être obtenus par un procédé selon l'une quelconque des revendications 1 à 12.

**14.** Matériau composite conducteur de protons comprenant une matrice de polymère au sein de laquelle sont dispersées des particules telles que définies selon la revendication 13.

**15.** Matériau composite conducteur selon la revendication 14, dans lequel la matrice est un polymère non conducteur de protons.

**16.** Matériau composite selon la revendication 14, dans lequel le polymère non conducteur de protons est un polymère fluoré.

**17.** Matériau composite selon la revendication 16, dans lequel le polymère fluoré est choisi parmi le polytétrafluoroéthylène (PTFE), le polyfluorure de vinylidène (PVDF), le copolymère tétrafluoroéthylène/éthylène (ETFE).

**18.** Matériau composite selon la revendication 15, dans lequel le polymère non conducteur de protons est un polymère aromatique ou hétérocyclique.

**19.** Matériau composite selon la revendication 18, dans lequel le polymère aromatique ou hétérocyclique est choisi parmi les polysulfones, les polyaryléthercétones, les polyimides, les polybenzimidazoles, les polyoxydes de phénylène, les polycarbonates.

**20.** Matériau composite selon la revendication 14, dans lequel la matrice est un polymère conducteur de protons.

**21.** Matériau composite selon la revendication 20, dans lequel le polymère conducteur de protons est un polymère perfluoré sulfoné.

**22.** Matériau composite selon la revendication 20, dans lequel le polymère conducteur de protons est un polymère aromatique ou hétérocyclique porteur de fonctions acides choisies parmi -SO$_3$H, -PO$_3$H$_2$ et -CO$_2$H.

23. Procédé de préparation d'un matériau composite tel que défini selon l'une quelconque des revendications 14 à 22, comprenant successivement les étapes suivantes :

   - mélanger, en l'absence de solvant, un ou plusieurs polymères constitutifs de la matrice avec des particules telles que définies selon la revendication 13 ;
   - former à partir du mélange obtenu le matériau composite par voie fondue.

24. Procédé de préparation d'un matériau composite tel que défini selon l'une quelconque des revendications 14 à 22, comprenant successivement les étapes suivantes :

   - une étape de mélange d'une solution comprenant des particules telles que définies selon la revendication 13 et un ou plusieurs solvants avec un ou plusieurs polymères constitutifs de la matrice ;
   - une étape de formation, à partir du mélange obtenu, d'un matériau composite par évaporation du ou des solvant(s).

25. Membrane de pile à combustible comprenant un matériau composite conducteur tel que défini selon l'une quelconque des revendications 14 à 22.

26. Membrane de pile à combustible selon la revendication 25, dans laquelle le matériau composite de la membrane comprend de 1 à 20% en poids de particules d'argile conductrices de protons, lorsque la matrice de polymère comprend un ou plusieurs polymère(s) conducteur(s) de protons.

27. Membrane de pile à combustible selon la revendication 25, dans laquelle le matériau composite de la membrane comprend de 5 à 50% en poids de particules d'argile conductrices de protons, lorsque la matrice de polymère comprend un ou plusieurs polymère(s) non conducteur(s) de protons.

28. Membrane de pile à combustible selon l'une quelconque des revendications 25 à 27, se présentant sous forme d'un film d'épaisseur allant de 20 à 200 micromètres.

29. Dispositif de pile à combustible comprenant au moins un assemblage électrode-membrane-électrode, dans lequel la membrane est telle que définie selon l'une quelconque des revendications 25 à 28.

**Patentansprüche**

1. Verfahren zur Herstellung von protonenleitenden Tonpartikeln, umfassend nacheinander die folgenden Schritte:

   a) einen Schritt der Aktivierung eines Tonpulvers, in dem man das Pulver einem Gasplasma aussetzt;
   b) einen Schritt des Pfropfens, in dem man das am Ende des Schritts a) erhaltene aktivierte Pulver in Kontakt bringt mit einer Lösung, die wenigstens eine Verbindung enthält, umfassend wenigstens eine Gruppe ausgewählt aus; -PO$_3$H$_2$, -CO$_2$H, -SO$_3$H und ihren Salzen, und umfassend wenigstens eine Gruppe, die dazu ausgelegt ist, sich an die Oberfläche des Pulvers zu pfropfen, wodurch die Verbindung an der Oberfläche des Pulvers mittels einer kovalenten chemischen Bindung immobilisiert wird.

2. Verfahren zur Herstellung von Partikeln nach Anspruch 1, bei dem der Ton ein Smektit-Ton ist.

3. Verfahren zur Herstellung von Partikeln nach Anspruch 2, bei dem der Smektit-Ton synthetisch oder natürlich ist.

4. Verfahren zur Herstellung von Partikeln nach Anspruch 3, bei dem der synthetische Smektit-Ton ein Laponit ist.

5. Verfahren zur Herstellung von Partikeln nach Anspruch 3, bei dem der natürliche Smektit-Ton ausgewählt ist aus der Gruppe gebildet durch Montmorillonit, Beidellit, Saponit, Hectorit.

6. Verfahren zur Herstellung von Partikeln nach Anspruch 1, bei dem der Ton ein Säulen-Smektit-Ton ist.

7. Verfahren zur Herstellung von Partikeln nach einem der Ansprüche 1 bis 6, bei dem das Gasplasma ein Plasma

aus $CO_2$, aus Helium oder aus einer Mischung $CO_2/He$ ist.

8. Verfahren zur Herstellung von Partikeln nach Anspruch 1, bei dem die Verbindung ein Vinylmonomer ist.

9. Verfahren zur Herstellung von Partikeln nach Anspruch 8, bei dem das Vinylmonomer ausgewählt ist aus Vinylsulfonsäure, Vinylphosphonsäure, Vinylessigsäure.

10. Verfahren zur Herstellung von Partikeln nach Anspruch 8, bei dem das Vinylmonomer ein Styrolmonomer ist.

11. Verfahren zur Herstellung von Partikeln nach Anspruch 10, bei dem das Styrolmonomer ausgewählt ist aus 4-Vinylbenzoesäure, 3-Vinylbenzoesäure, 4-Vinylbenzolsulfonsäure, 3-Vinylbenzolsulfonsäure, 4-Vinylbenzolphosphonsäure, 3-Vinylbenzolphosphonsäure.

12. Verfahren zur Herstellung von Partikeln nach Anspruch 8, bei dem das Vinylmonomer ein fluoriertes Monomer ist.

13. Protonenleitende Tonpartikel, die erhältlich sind durch ein Verfahren nach einem der Ansprüche 1 bis 12.

14. Protonenleitendes Verbundmaterial, umfassend eine Polymermatrix, in der Partikel wie in Anspruch 13 definiert dispergiert sind.

15. Leitendes Verbundmaterial nach Anspruch 14, bei dem die Matrix ein nichtprotonenleitendes Polymer ist.

16. Verbundmaterial nach Anspruch 14, bei dem das nicht-protonenleitende Polymer ein fluoriertes Polymer ist.

17. Verbundmaterial nach Anspruch 16, bei dem das fluorierte Polymer ausgewählt ist aus Polytetrafluorethylen (PTFE), Vinylidenpolyfluorid (PVDF), Tetrafluorethylen/Ethylen-Copolymer (ETFE).

18. Verbundmaterial nach Anspruch 15, bei dem das nicht-protonenleitende Polymer ein aromatisches oder heterozyklisches Polymer ist.

19. Verbundmaterial nach Anspruch 18, bei dem das aromatische oder heterozyklische Polymer ausgewählt ist aus den Polysulfonen, den Polyaryletherketonen, den Polyimiden, den Polybenzimidazolen, den Phenylenpolyoxiden, den Polykarbonaten.

20. Verbundmaterial nach Anspruch 14, bei dem die Matrix ein protonenleitendes Polymer ist.

21. Verbundmaterial nach Anspruch 20, bei dem das protonenleitende Polymer ein perfluoriertes sulfoniertes Polymer ist.

22. Verbundmaterial nach Anspruch 20, bei dem das protonenleitende Polymer ein aromatisches oder heterozyklisches Polymer ist, welches Träger von Säurefunktionen ist, ausgewählt aus $-SO_3H$, $-PO_3H_2$, $-CO_2H$.

23. Verfahren zur Herstellung eines Verbundmaterials wie in einem der Ansprüche 14 bis 22 definiert, umfassend nacheinander die folgenden Schritte:

   - mischen, in Abwesenheit des Lösungsmittels, eines oder mehrerer Polymere, die Bestandteile der Matrix sind, mit Partikeln wie in Anspruch 13 definiert;
   - bilden des Verbundmaterials ausgehend von der erhaltenen Mischung durch Schmelzen.

24. Verfahren zur Herstellung eines Verbundmaterials wie in einem der Ansprüche 14 bis 22 definiert, umfassend nacheinander die folgenden Schritte:

   - einen Schritt des Mischens einer Lösung, die Partikel wie in Anspruch 13 definiert sowie ein oder mehrere Lösungsmittel umfasst, mit einem oder mehreren Polymeren, die Bestandteile der Matrix sind;
   - einen Schritt des Bildens eines Verbundmaterials ausgehend von der erhaltenen Mischung durch Verdampfen des oder der Lösungsmittel (s).

25. Brennstoffzellenmembran, umfassend ein leitendes Verbundmaterial wie in einem der Ansprüche 14 bis 22 definiert.

**26.** Brennstoffzellenmembran nach Anspruch 25, bei der das Verbundmaterial der Membran 1 bis 20 Gewichtsprozent protonenleitende Tonpartikel enthält, wenn die Polymermatrix ein oder mehrere protonenleitende Polymere enthält.

**27.** Brennstoffzellenmembran nach Anspruch 25, bei der das Verbundmaterial der Membran 5 bis 50 Gewichtsprozent protonenleitende Tonpartikel enthält, wenn die Polymermatrix ein oder mehrere nicht-protonenleitende Polymere enthält.

**28.** Brennstoffzellenmembran nach einem der Ansprüche 25 bis 27, das die Form eines Films mit einer Dicke von 20 bis 200 Mikrometer aufweist.

**29.** Brennstoffzellenvorrichtung, umfassend wenigstens eine Anordnung Elektrode-Membran-Elektrode, bei der die Membran wie in einem der Ansprüche 25 bis 28 definiert ist.

## Claims

**1.** Process for preparing proton-conducting clay particles, successively comprising the following steps:

a) a step of activating a clay powder, in which the said powder is subjected to a gas plasma;
b) a grafting step in which the activated powder obtained from step a) is placed in contact with a solution comprising at least one compound comprising at least one group chosen from $-PO_3H_2$, $-CO_2H$ and $-SO_3H$ and salts thereof and comprising at least one group capable of grafting onto the surface of the said powder, whereby said compound is immobilized onto the surface of said powder by means of a covalent chemical bond.

**2.** Process for preparing according to Claim 1, in which the clay is a smectite clay.

**3.** Process for preparing according to Claim 2, in which the smectite clay is synthetic or natural.

**4.** Process for preparing according to Claim 3, in which the synthetic smectite clay is a laponite.

**5.** Process for preparing according to Claim 3, in which the natural smectite clay is chosen from the group consisting of montmorillonite, beidellite, saponite, and hectorite.

**6.** Process for preparing according to Claim 1, in which the clay is a pillared smectite clay.

**7.** Process for preparing according to any one of Claims 1 to 6, in which the gas plasma is a plasma of $CO_2$, of helium or of a $CO_2$/He mixture.

**8.** Process for preparing according to Claim 1, in which the compound is a vinyl monomer.

**9.** Process for preparing according to Claim 8, in which the vinyl monomer is chosen from vinylsulfonic acid, vinylphosphonic acid and vinylacetic acid.

**10.** Process for preparing according to Claim 8, in which the vinyl monomer is a styrene monomer.

**11.** Process for preparing according to Claim 10, in which the styrene monomer is chosen from 4-vinylbenzoic acid, 3-vinylbenzoic acid, 4-vinylbenzenesulfonic acid, 3-vinylbenzenesulfonic acid, 4-vinylbenzenephosphonic acid and 3-vinylbenzenephosphonic acid.

**12.** Process for preparing according to Claim 8, in which the vinyl monomer is a fluorinated monomer.

**13.** Proton-conducting clay particles that may be obtained via a process according to any one of Claims 1 to 12.

**14.** Proton-conducting composite material comprising a polymer matrix in which are dispersed particles as defined according to Claim 13.

**15.** Conductive composite material according to Claim 14, in which the matrix is a non-proton-conducting polymer.

16. Composite material according to Claim 14, in which the non-proton-conducting polymer is a fluorinated polymer.

17. Composite material according to Claim 16, in which the fluorinated polymer is chosen from polytetrafluoroethylene (PTFE), polyvinylidene fluoride (PVDF) and tetrafluoroethylene/ethylene copolymer (ETFE).

18. Composite material according to Claim 15, in which the non-proton-conducting polymer is an aromatic or heterocyclic polymer.

19. Composite material according to Claim 18, in which the aromatic or heterocyclic polymer is chosen from polysulfones, polyaryl ether ketones, polyimides, polybenzimidazoles, polyphenylene oxides and polycarbonates.

20. Composite material according to Claim 14, in which the matrix is a proton-conducting polymer.

21. Composite material according to Claim 20, in which the proton-conducting polymer is a sulfonated perfluorinated polymer.

22. Composite material according to Claim 20, in which the proton-conducting polymer is an aromatic or heterocyclic polymer bearing acid functions chosen from $-SO_3H$, $-PO_3H_2$ and $-CO_2H$.

23. Process for preparing a composite material as defined according to any one of Claims 14 to 22, successively comprising the following steps:

- mixing, in the absence of solvent, one or more constituent polymers of the matrix with particles as defined according to Claim 13;
- melt-forming the composite material from the mixture obtained.

24. Process for preparing a composite material as defined according to any one of Claims 14 to 22, successively comprising the following steps:

- a step of mixing a solution comprising particles as defined according to Claim 13 and one or more solvents with one or more constituent polymers of the matrix;
- a step of forming, from the mixture obtained, a composite material by evaporation of the solvent(s).

25. Fuel cell membrane comprising a conductive composite material as defined according to any one of Claims 14 to 22.

26. Fuel cell membrane according to Claim 25, in which the composite material of the membrane comprises from 1% to 20% by weight of proton-conducting clay particles, when the polymer matrix comprises one or more proton-conducting polymer(s).

27. Fuel cell membrane according to Claim 25, in which the composite material of the membrane comprises from 5% to 50% by weight of proton-conducting clay particles, when the polymer matrix comprises one or more non-proton-conducting polymer(s).

28. Fuel cell membrane according to any one of Claims 25 to 27, which is in the form of a film with a thickness ranging from 20 to 200 micrometres.

29. Fuel cell device comprising at least one electrode-membrane-electrode assembly, in which the membrane is as defined according to any one of Claims 25 to 28.

**EP 1 745 110 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6071335 A

- WO 02092673 A

**Littérature non-brevet citée dans la description**

- **MALHOTR et al.** *J.Electrochem.Soc.,* 1997, 144
- **STAITI et al.** *J.Power Sources,* 2000, vol. 90, 231
- **BARADIE et al.** *Macromol.Symp.,* 1999, vol. 138, 85

- **HIRATE et al.** *J.Sol-Gel Sci. And Techn.,* 2000, vol. 17, 61
- *J.Electrochem.Soc.,* 1997, 144
- *J.Power Sources,* 2000, vol. 90, 231
- *Macromol.Symp.,* 1999, vol. 138, 85
- *J.Sol-Gel Sci. And Techn.,* 2000, vol. 17, 61